(19) Europäisches Patentamt / European Patent Office / Office européen des brevets

(11) **EP 3 237 884 B1**

(12) **EUROPEAN PATENT SPECIFICATION**


(45) Date of publication and mention of the grant of the patent:
**04.05.2022 Bulletin 2022/18**

(21) Application number: **14824481.7**

(22) Date of filing: **23.12.2014**

(51) International Patent Classification (IPC):
***H01B 3/56*** *(2006.01)* ***H01H 11/00*** *(2006.01)*
***H01H 33/56*** *(2006.01)* *G01N 21/35 (2014.01)*
*G01N 30/88 (2006.01)*

(52) Cooperative Patent Classification (CPC):
**H01H 33/563; H01B 3/56; H01H 11/0062;**
G01N 2021/3595; G01N 2030/8845

(86) International application number:
**PCT/EP2014/079168**

(87) International publication number:
**WO 2016/102002 (30.06.2016 Gazette 2016/26)**


(54) **METHOD FOR DIAGNOSING, MONITORING OR PREDICTING A CONDITION OF A SWITCHING APPARATUS**

VERFAHREN ZUR DIAGNOSE, ÜBERWACHUNG ODER VORHERSAGE EINES ZUSTANDS EINER SCHALTVORRICHTUNG

PROCÉDÉ POUR LE DIAGNOSTIC, LA SURVEILLANCE OU LA PRÉDICTION D’UN ÉTAT D’UN APPAREIL DE COMMUTATION


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.11.2017 Bulletin 2017/44**



(73) Proprietor: **Hitachi Energy Switzerland AG**
**5400 Baden (CH)**

(72) Inventors:
- **MANTILLA, Javier**
  **CH-5400 Baden (CH)**
- **BERGSBLOM, Malena**
  **S-74571 Enköping (SE)**
- **GROB, Stephan**
  **CH-5400 Baden (CH)**
- **KRAMER, Axel**
  **CH-5430 Wettingen (CH)**
- **STOLLER, Patrick**
  **8308 Illnau (CH)**
- **PAUL, Thomas, Alfred**
  **9422 Gstaad (CH)**

(74) Representative: **Schaad, Balass, Menzl & Partner AG**
**Bellerivestrasse 20**
**Postfach**
**8034 Zürich (CH)**



(56) References cited:
**WO-A1-2012/080246**
**WO-A1-2014/037395**
**DE-A1-102013 103 823**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 3 237 884 B1

## Description

The present invention relates to a method for diagnosing, monitoring and/or predicting a condition, in particular the dielectric insulation and/or arc extinction capability, of a switching apparatus. The invention further relates to a device for diagnosing, monitoring and/or predicting a condition of a switching apparatus.

Dielectric insulation media in liquid or gaseous state are conventionally applied for the insulation of an electrical component in a wide variety of switching apparatuses. In a high voltage switchgear, for example, the electrical component is arranged in a gas-tight housing, the interior of which defines an insulating space, said insulation space comprising an insulation gas electrically insulating the housing from the electrical component. For interrupting the current in a respective switching apparatus, the insulating gas further functions as an arc extinction gas.

Recently, the use of organofluorine compounds in an insulating and/or arc extinction gas has been suggested. Specifically, WO 2010/142346 discloses a dielectric insulation medium comprising a fluoroketone having from 4 to 12 carbon atoms. A dielectric insulation medium of particular relevance is further disclosed in WO 2012/080246, relating to a medium comprising a dielectric insulation gas, which comprises a fluoroketone containing exactly 5 carbon atoms in a mixture with a dielectric insulation gas component different from said fluoroketone. Still further WO 2012/080222 discloses a dielectric insulation medium comprising a hydrofluoromonoether.

Both groups of compounds, i.e. fluoroketones and hydrofluoro monoethers have been shown to have high dielectric insulation capabilities, in particular a high dielectric strength, as well as high arc extinction capabilities. At the same time, they have a very low Global Warming Potential (GWP) and very low toxicity. The combination of these characteristics renders these organofluorine compounds highly suitable as a substitute for $SF_6$ (sulphur hexafluoride), which has commonly been used as a dielectric insulation medium, but which is known to have a high global warming potential (GWP).

However, in particular during e.g. a switching operation, which due to the energy input (e.g. by an arc generated during switching) is accompanied by a high temperature increase, organofluorine compounds can be subject to decomposition. This decomposition of organofluorine compounds is particularly pronounced in arc-interrupting apparatuses, such as circuit breakers or disconnectors.

In contrast to $SF_6$, organofluorine compounds having a low GWP, and fluoroketones in specific, do not recombine once decomposed.

To ensure proper functioning over the electrical lifetime of the switching apparatus, several parameters indicative of the ageing of the apparatus need to be monitored, such as nozzle ablation, arcing contact ablation, commutation, mechanical stability, friction, resistance of the current path, etc.. This monitoring task is particularly demanding for circuit breakers and disconnectors, where proper functioning has to be ensured for all switching and commutation scenarios.

Among the parameters to be monitored in a switching apparatus, and particularly in a circuit breaker or a disconnector, the composition of the insulation medium is of paramount importance, since together with the total pressure of the insulation medium it governs the insulation and arc-quenching capability.

However, analysis of the concentration of the individual components of the insulation medium composition is relatively complicated, especially with regard to the concentration of the organofluorine compound. The complexity is at least to a certain part owed to the fact that after switching, no simple binary mixture is to be analysed, but a composition comprising multiple components including decomposition products generated during switching. Thus, relatively sophisticated means are necessary to analyse the amount of the organofluorine compound and its change over time.

WO 2014/037030 discloses a method for operating a fluid-insulated electrical apparatus which comprises the method element of carrying out at least one optical measurement, such as optical absorption measurements, fluorescence measurements or photoacoustic measurements, and/or at least one gas chromatographic measurement. Despite of the advantages achieved by the method defined in WO 2014/037030, the devices for performing the optical and/or the gas chromatographic measurements are relatively expensive and require a relatively complex maintenance.

WO 2014/037395 A1 discloses a method for operating a fluid-insulated electrical apparatus, wherein the insulation fluid of the electrical apparatus comprises at least two fluid components which are not contaminants of the insulation fluid. The method according to WO 2014/037395 A1 comprises the step of carrying out at least one optical measurement and/or at least one gas chromatographic measurement for deriving a first concentration of a first fluid component and deriving a second concentration of a second fluid, wherein the operating state of the electrical apparatus is derived using the concentration of the first or second fluid.

In consideration of these drawbacks, the object of the present invention is thus to provide a simple method for diagnosing, monitoring and/or predicting a condition, in particular the dielectric insulation capability and/or arc extinction capability, of a switching apparatus in which an insulation medium comprising an organofluorine compound is used. Specifically, the method shall allow circumventing the direct measurement of the concentration of the organofluorine compound of the insulation medium, which as mentioned above is typically rather complex.

According to a first aspect of the present invention, the object is achieved according to the method defined in claim 1. Preferred embodiments of the invention are defined in the dependent claims.

According to claim 1, the method of the present invention relates to the diagnosing, monitoring and/or predicting of a condition of a switching apparatus, in particular its dielectric insulation and/or arc extinction capability, the switching apparatus containing an insulation medium comprising at least one organofluorine compound C1, wherein the method comprises the method elements of:

a) selecting at least one physical quantity x of the insulation medium;

b) determining the difference between a value $x_{S0}$ of the physical quantity x at an initial state S0 of the apparatus and a value $x_{S1}$ of the physical quantity x at a second state S1, said second state S1 being later in time than the initial state S0, and

c) deducing from the difference between $x_{S0}$ and $x_{S1}$ the decrease in the amount of the at least one organofluorine compound C1 and/or the total amount of the at least one organofluorine compound C1 present in the switching apparatus,

wherein the physical quantity x is the amount of at least one decomposition product C2 of the at least one organofluorine compound C1 or is a physical quantity dependent on the amount of at least one decomposition product C2 of the at least one organofluorine compound C1 and said method further comprising the method elements of counting a number of switching events, determining therefrom the total arc energy to which the insulation medium has been subjected to, and correlating the total arc energy to the amount of the organofluorine compound C1 lost by decomposition.

Thus, a physical quantity other than the amount of the organofluorine compound C1 is selected for deriving the decomposition rate of the organofluorine compound C1. In other words, the decomposition rate is according to the present invention determined indirectly, circumventing the direct measurement of the amount of organofluorine compound C1.

The term "decomposition rate of the organofluorine compound" as used in the context of the present invention specifically relates to the molar amount of consumption of the organofluorine compound C1 per energy input, i.e. per amount of energy introduced into the system.

Rather than directly measuring the amount of organofluorine compound C1, the difference in the amount of at least one decomposition product of the organofluorine compound C1 or a physical quantity dependent thereon is determined at least at two subsequent points in time. According to a specifically preferred embodiment, the pressure p of the insulation medium is determined as the physical quantity dependent on the amount of the at least one decomposition product C2, as will be discussed in further detail below.

By carrying out the method of the present invention, there is thus no need for determining an absolute value of the physical quantity x. Rather, determining the difference of the physical quantity x at the at least two points in time has been shown to be sufficient for diagnosing, monitoring and/or predicting the condition of the switching apparatus.

In particular, a decrease in the amount of the at least one organofluorine compound C1 can be derived. Since the initial composition of the insulation gas filled in the insulation space (i.e. the composition before performing any switching event) is typically known, also the total amount of the at least one organofluorine compound C1 present after the switching event(s) can be derived.

In consequence, diagnosing, monitoring and/or predicting the dielectric insulation and/or arc extinction capability can be performed in a relatively simple manner and by a relatively simple sensor. In the specific case further discussed below, where in method element a) the pressure p of the insulation medium is selected as physical quantity x, and in method element b) the difference between pressure $p_{S0}$ at the initial state S0 and pressure $p_{S2}$ at the second state S1 is determined, a relatively simple manometer can be used for deducing the decomposition rate of the at least one organofluorine compound C1. The manometer is relatively easy to handle and its maintenance is relative simple and straightforward.

The term "insulation medium" as used in the context of the present invention is specifically to be understood as an insulation fluid. More specifically, the term "insulation medium" is to be understood as being or comprising an insulation gas. In other words, the insulation medium can be an insulation gas or a two-phase system comprising a liquid portion in addition to a gaseous portion of the insulation medium.

According to a specific embodiment of the present invention, the organofluorine compound C1 is selected from the group consisting of: fluoroethers, in particular hydrofluoromonoethers, fluoroketones, in particular perfluoroketones, fluoroolefins, in particular hydrofluoroolefins, and fluoronitriles, in particular perfluoronitriles, as well as mixtures thereof.

In this regard, it is particularly preferred that the insulation medium comprises a hydrofluoromonoether containing at least three carbon atoms. A more detailed description of the respective hydrofluoromonoethers is for example given in WO 2014/053661 or WO 2012/080222.

According to a further particularly preferred embodiment, the insulation medium comprises a fluoroketone containing from four to twelve carbon atoms, preferably containing exactly five carbon atoms or exactly six carbon atoms,

or a mixture thereof. A more detailed description of the respective fluoroketones is for example given in WO 2014/053661 or WO 2012/080246.

According to particularly preferred embodiments, the fluoroketone is a perfluoroketone, and more particularly has the molecular formula $C_5F_{10}O$, i.e. it is fully saturated without any double or triple bonds between carbon atoms. The fluoroketone may more preferably be selected from the group consisting of 1,1,1,3,4,4,4-heptafluoro-3-(trifluoromethyl)butan-2-one (also named decafluoro-2-methylbutan-3-one), 1,1,1,3,3, 4,4, 5, 5, 5-decafluoropentan-2-one, 1,1,1,2,2,4,4,5,5,5-decafluoropentan-3-one and octafluorocylcopentanone, and most preferably is 1,1,1,3,4,4,4-heptafluoro-3-(trifluoromethyl)butan-2-one. 1,1,1,3,4,4,4-heptafluoro-3-(trifluoromethyl)butan-2-one can be represented by the following structural formula (I):

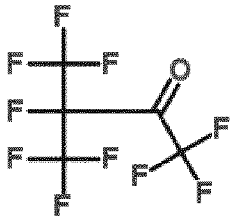

(I)

1,1,1,3,4,4,4-heptafluoro-3-(trifluoromethyl)butan-2-one, herein briefly referred to as "C5K", with molecular formula $CF_3C(O)CF(CF_3)_2$ or $C_5F_{10}O$, has been found to be particularly preferred for high and medium voltage insulation applications, because it has the advantages of high dielectric insulation performance, in particular in mixtures with a dielectric carrier gas, has very low GWP and has a low boiling point. It has an Ozone Depletion Potential (ODP) of 0 and is practically non-toxic.

Additionally or alternatively, the insulation medium can contain 1,1,1,2,4,4,5,5,5-nonafluoro-2-(trifluoromethyl) pentan-3-one (also named dodecafluoro-2-methylpentan-3-one), which can be represented by the following structural formula (II) :

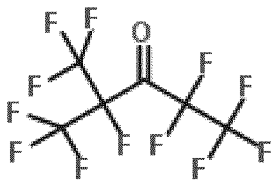

(II)

1,1,1,2,4,4,5,5,5-Nonafluoro-4-(trifluoromethyl)pentan -3-one (here briefly referred to as "C6K") with molecular formula $C_2F_5C(O)CF(CF_3)_2$) has been found to be particularly preferred for high voltage insulation applications because of its high insulating properties and its extremely low GWP. Specifically, its pressure-reduced breakdown field strength is around 240 kV/(cm*bar), which is much higher than the one of air having a much lower dielectric strength ($E_{cr}$ = 25 kV/(cm*bar)). It has an ozone depletion potential of 0 and is non-toxic. Thus, the environmental impact is much lower than when using $SF_6$, and at the same time outstanding margins for human safety are achieved.

Additionally or alternatively, the insulation medium can comprise a fluoronitrile as organofluorine compound C1, in particular a perfluoronitrile. In particular, the organofluorine compound C1 can be a fluoronitrile, specifically a perfluoronitrile, containing two carbon atoms, three carbon atoms or four carbon atoms. More particularly, the fluoronitrile can be a perfluoroalkylnitrile, specifically perfluoroacetonitrile, perfluoropropionitrile ($C_2F_5CN$) and/or perfluorobutyronitrile ($C_3F_7CN$). Most particularly, the fluoronitrile can be perfluoroisobutyronitrile (according to the formula $(CF_3)_2CFCN$) and/or perfluoro-2-methoxypropane-nitrile (according to the formula $CF_3CF(OCF_3)CN$) . Of these, perfluoroisobutyronitrile is particularly preferred due to its low toxicity.

Additionally or alternatively, the insulation medium can comprise a fluoroolefin, in particular a hydrofluoroolefin. More particularly, the fluoroolefin or hydrofluorolefin, respectively, contains exactly three carbon atoms. According to an embodiment, the hydrofluoroolefin is thus selected from the group consisting of: 1,1,1,2-tetrafluoropropene (HFO-1234yf), 1,2,3,3-tetrafluoro-2-propene (HFO-1234yc), 1,1,3,3-tetrafluoro-2-propene (HFO-1234zc), 1,1,1,3-tetrafluoro-2-propene (HFO-1234ze), 1,1,2,3-tetrafl-uoro-2-propene (HFO-1234ye), 1,1,1,2,3-pentafluoropropene (HFO-1225ye), 1,1,2,3,3-pentafluoropropene (HFO-1225yc), 1,1,1,3,3-pentafluoropropene (HFO-1225zc), (Z)1,1,1,3-tetrafluoropropene (HFO-1234zeZ), (Z)1,1,2,3-tetrafluoro-2-propene (HFO-1234yeZ), (E)1,1,1,3-tetrafluoropropene (HFO-1234zeE), (E)1,1,2,3-tetrafluoro-2-propene (HFO-1234yeE), (Z)1,1,1,2,3-pentafluoropropene (HFO-1225yeZ), (E)1,1,1,2,3-pentafluoropropene (HFO-1225yeE), and combinations thereof.

More specifically, the insulation medium further comprises a background gas, in particular selected from the group consisting of: air, specifically synthetic air and/or technical air, an air component, specifically nitrogen and/or oxygen, carbon dioxide, a nitrogen oxide, and mixtures thereof.

Typically, at least one switching operation is performed between the initial state S0 and the second state S1. Due to the high impact of the switching conditions on the composition of the insulation gas, in particular in view of the high arc energy input and, therefore, the high temperature increase favouring decomposition reactions, the difference between value $x_{S0}$ and value $X_{S1}$ is substantial allowing for the use of a relatively simple sensor for determining the change in a physical "bulk property", such as the pressure of the insulation medium. In particular, a manometer of relatively low sensitivity can be used. As will be shown in further detail in connection with the attached figures, a resolution allowing the detection of a pressure change of about 100 mbar can be sufficient to allow to determine a change in the partial pressure of C5K of 10 mbar to 20 mbar.

In method element a) of the method, the pressure p of the insulation medium is thus preferably selected as physical quantity x.

In this regard, it is further preferred that in method element b) the difference between pressure $p_{S0}$ at the initial state S0 and pressure $p_{S1}$ at a second state S1 is determined. In method element c), the difference between $p_{S0}$ and $p_{S1}$ can be correlated to a specific amount of organofluorine compound C1 present at the second state S1 and/or to a specific amount of organofluorine compound C1 decomposed by the transition from the initial state S0 to the second state S1 by means of pre-calibration data, according to a further preferred embodiment.

Pre-calibration can for example be performed using an optical measurement of the organofluorine compound C1 before, during and after defined switching events and simultaneously determining the pressure over time. Possible methods for measurement, which can be used for the pre-calibration, are described in WO 2014/037030. In particular, optical absorption measurement, fluorescence measurement or photoacoustic measurement can be used as described in WO2014/037030, most specifically optical absorption measurement. Based on this one-time calibration, the difference in the initial pressure $p_{S0}$ at the intial state S0 and the second pressure $p_{S1}$ at a second state S1 can be correlated to a respective decrease in concentration of the organofluorine compound C1 and thus to a specific decomposition rate. According to a specific embodiment, the second state S1 relates to the state that is obtained starting from state S0 by at least one switching operation, whereby the change from S0 to S1 is adiabatic. The term "adiabatic" as used in this context is to be understood as not in thermal equilibrium with the solid elements of the switching apparatus. In other words, the gaseous insulation medium that is suddenly heated by the switching event is assumed to be surrounded by thermally isolating walls.

When selecting the pressure p as physical quantity, the difference of which is to be determined, it is the adiabatic pressure that is preferably determined, i.e. the difference from the pressure present before the switching event and the pressure present directly, i.e. instantaneously, after the switching event.

The pressure increase caused by switching can be explained by the following mechanism:
During switching, the fraction of arc energy dE which is transferred into the insulation gas leads to a temperature increase $dT_i$ of the insulation gas and results in the generation of additional gas particles $dN_i^{(t)}$, i.e. decomposition products from the organofluorine compound C1, specifically the fluoroketone, resulting in a pressure increase $dp_i$. Assuming the ideal gas law, the relative pressure increase $dp_i/p_i$ owed to the two above mentioned contributions can be written in the following way:

$$\frac{dpi}{pi} \approx \frac{dTi}{Ti} + \frac{dNi(t)}{Ni(t)} = f(dE)$$

wherein $p_i$ is the initial total pressure before the switching event by which the arc is produced, $N_i^{(t)}$ is the initial total number of particles and $T_i$ is the initial average temperature of the gas. f(dE) is a function of arc energy dE which is transferred to the insulation gas. The additionally generated particles $dN_i^{(t)}$ can be related to the decrease in the number of organofluorine compound particles, i.e. the decrease of the total amount of the organofluorine compound C1.

Thus, the decrease in the number of organofluorine compound C1 particles can be put into correlation with a respective pressure increase of the insulation gas.

It has been found that the correlation of adiabatic pressure increase and organofluorine compound C1 particle decrease is universal for different types of experiments and that the decrease in organofluorine compound C1 particles correlates well with the fraction of arc energy introduced into the system.

Thus, once the relation between organofluorine compound C1 particle decrease and adiabatic pressure increase is known for a specific switching apparatus, it is sufficient to determine merely the pressure increase to derive the organofluorine compound C1 decrease. The concept will be further illustrated by means of the attached figures.

As will be further illustrated by means of the attached figures, it is according to a further aspect of the present

invention also possible to correlate the total arc energy transferred into the insulation gas to the amount of the decomposed portion of the organofluorine compound C1 by means of respective pre-calibration data.

Alternatively or additionally to selecting the pressure as physical quantity, the difference of which is to be determined, the amount of at least one decomposition product can be selected as physical quantity x in method element a), said at least one decomposition product being selected from the group consisting of: tetrafluoromethane, hexafluoropropene, heptafluoropropane, and combinations thereof.

For example, the amount of tetrafluoromethane can be determined, which is the most abundant decomposition product of the organofluorine compound C1, specifically the fluoroketone. By determining the amount of tetrafluoromethane, the decomposition rate of the organofluorine compound C1 can be derived, irrespective whether only one fluoroketone, e.g. C5K in combination with $CO_2$, or a mixture of fluoroketones, e.g. C5K and C6K in combination with $CO_2$, are used as e torganofluorine compound C1.

The amount of the at least one decomposition product is preferably determined by gas chromatography, Fourier transform infrared spectroscopy, and/or optical absorption measurement, specifically by tunable diode laser absorption spectroscopy.

As mentioned, the method of the present invention relates to diagnosing, monitoring and/or predicting a condition of a switching apparatus, and more particular of a circuit breaker, a disconnector, an earthing switch, and/or a transformer.

In particular in view of determining the end of life of the functionality of the insulation medium used in the switching apparatus, the decomposition rate r of the organofluorine compound C1, i.e. the molar amount of organofluorine compound C1 decomposed per amount of energy input, is determined. This determination can be performed empirically, as e.g. described below by way of the attached figures.

The decomposition rate r can also be determined according to the following formula:

$$r(C1decomp.) = \frac{\delta n * n(C1;S0)}{n(tot.decomp.)} \;\; / \;\; E(input)$$

with $n(C1;S0)$ being the amount of the organofluorine compound C1 in mole at the initial state S0 and being defined by the following formula:

$$n(C1;S0) = \frac{p(C1) * V}{R * T0}$$

with $p(C1)$ being the partial pressure of the organofluorine compound C1 at the initial state S0, V being the volume of the gas space in which the insulation medium is contained, and T0 being the initial steady state temperature of the electrical apparatus;

$\delta n$ being the difference in the total amount of moles present in the second state S1 compared to the total amount of moles present in initial state S0, $\delta n$ being defined by the following formula:

$$\delta n = \frac{\delta p(S1 - S0) * V}{R * T}$$

with $\delta p(S1 - S0)$ being the pressure increase due to irreversible decomposition between the second state S1 and the initial state S0, whereby the second state S1 is obtained from the initial state S0 by performing one single switching operation and after temperature T having reached again the initial steady state temperature T0 of the switching apparatus; with R being the ideal gas constant;

*n*(*tot.decomp.*) relating to the amount of molecules generated by the total decomposition of C1 and being defined according to the following formula:

$$n(tot.decomp.) = ((c + d + \cdots) - (a + b + \cdots))/a * \frac{(p(C1) * V}{R * T0}$$

with $p(C1)$ again being the partial pressure of the organofluorine compound C1 before the decomposition reaction has occurred, i.e. in the first state S0, c+d+... being the stoichiometric numbers of product entities and a+b+... being

the stoichiometric numbers of the reactant entities with "a" being the stoichiometric number of the organofluorine compound C1 (according to the chemical reaction formula); and

***E(input)*** being the amount of energy input into the system by the at least one arcing event caused by the switching operation and being defined by the following formula:

$$E(input) = \int_0^{t(arc)} i(arc) * u(arc)dt$$

with t = time variable, t(arc) = time duration of the at least one arcing event, i (arc) = arcing current density of the at least one arcing event, and u(arc) = arcing voltage of the at least one arcing event.

For T0, i.e. the steady state temperature of the electrical apparatus, a specific temperature of 20°C (293 K) can be used for the calculation. Since more specifically, T is at least approximately identical to T0, the specific temperature of 20°C (293 K) can likewise be used for T. The method according to these preferred embodiments will be further exemplified by means of the attached example.

A more specific embodiment of this method is based on the assumption that the organofluorine compound C1 is mostly decomposed to tetrafluoromethane $CF_4$, i.e. that $CF_4$ is by far the most abundant decomposition product. Based on this assumption, *n(tot.decomp.)* can in particular be defined according to the following formula:

$$n(tot.decomp.) = ((c + d + \cdots) - (a + b + \cdots))/a * \frac{p(C1) * V}{R * T0}$$

with $p(C_1)$ being again the partial pressure of the organofluorine compound C1 in the initial state S0, and a, b, c and d being defined by the chemical equation of the decomposition of the organofluorine compound C1 when reacting with oxygen $O_2$ into carbon dioxid $CO_2$ and tetrafluoromethane $CF_4$:

$$a \cdot C1 + b \cdot O_2 \rightarrow c \cdot CO_2 + d \cdot CF_4 \quad .$$

According to a still more specific embodiment, the organofluorine compound C1 is a perfluoroketone having exactly 5 carbon atoms ($C_5F_{10}O$), specifically 1,1,1,3,4,4,4-hepta-fluoro-3-(trifluoromethyl)butan-2-one (C5K). In this case, *n(tot.decomp.)* can be defined as follows:

$$n(tot.decomp.) = ((5 + 5) - (2 + 4))/2 * \frac{p(C1) * V}{R * T0}$$

according to the following chemical equation:

$2 \cdot C_5F_{10}O + 4 \cdot O_2 \rightarrow 5 \cdot CO_2 + 5 \cdot CF_4$, i.e. with a=2, b=4, c=5, and d=5.

In the case where the switching apparatus is a circuit breaker, a disconnector and/or a transformer, the end of life of the functionality of the insulation medium is deduced by scaling the decomposition rate *r*(*C*1*decomp.*) with the multiplier

$$Ka = V(arcing\ zone)/V(insulation\ space)$$

with V(arcing zone) being the volume of the arcing zone and V(insulation space) being the volume of the insulation space of the circuit breaker, the disconnector or the transformer, respectively, the amount of the organofluorine compound n(C1) in the volume V(insulation space) of the insulation space being above a minimum operational threshold value for providing safe operation of the switching apparatus.

The term "end of life of the functionality" as used in this context means the point in time after which the insulating and/or arc extinguising properties of the insulation medium fall below a value required for ensuring a safe operation of the apparatus. Thus, the method further allows a prediction as to when the insulation medium needs to be replenished at the latest. The possibility for predicting this condition further contributes to a safe operation of the switching apparatus.

The correlation can be done by means of pre-calibration data. In this regard, the amount of the decomposed organofluorine compound can be obtained by multiplying the decomposition rate normalized to the arc energy input by the total amount of arc energy. The decomposition rate can either be obtained empirically, as outlined by means of the figures, or according to the formulae given above.

According to a specific embodiment, the total arc energy is determined by multiplying an average arc energy per switching event with the total number of switching events.

Alternatively, the total arc energy is determined by adding the arc energy values of all switching events, whereby for each switching event the respective arc current interrupted is determined and correlated to the respective arc energy by means of respective pre-calibration data and/or by a respective function, as will be shown by means of the attached figures.

According to a still further aspect, the present invention also relates to a method for reconditioning the dielectric insulation and/or arc extinction capability of a switching apparatus, the method comprising the method elements a) to c) described above and comprising the further method element of:

replenishing the insulation medium with the insulation medium or a component thereof, once the total amount of the organofluorine compound C1 present in the switching apparatus falls below a predetermined threshold value. Typically, the threshold value is higher than the value relating to the above mentioned end of life of functionality of the insulation medium.

According to a still further aspect, the present invention also relates to a device for diagnosing, monitoring and/or predicting a condition of a switching apparatus, in particular its dielectric insulation and/or arc extinction capability, the device being configured to perform the method for diagnosing, monitoring and/or predicting a condition of a switching apparatus according to any of the claims 1 to 17, the device comprising a pressure determining unit and a switching operation counting unit. The device further can be suitable for performing the method of reconditioning according to claim 18, the device comprising a replenishing unit for replenishing the insulation medium with the insulation medium or a component thereof, once the total amount of the organofluorine compound C1 present in the switching apparatus falls below a predetermined threshold value. The device allows to carry out the methods described above by very simple equipment, which emphasizes the advantages of both the device and the methods of the present invention also from an economic point of view. The invention is further illustrated by way of the attached figures of which

- Fig. 1 shows the concentration of C5K in an insulation gas as a function of the number of arc events for three different arcing scenarios differing in the current rating and the arc input energy;
- Fig. 2 shows the decomposition rate of C5K per arc energy input for three different arcing scenarios and for a varying number of shots performed for the respective arcing scenarios; and
- Fig. 3 shows the partial pressure of C5K contained in the insulation gas as a function of the pressure increase of the insulation gas for three different arcing experiments.

As shown in Fig. 1, the decrease in the concentration of C5K contained in the insulation gas has been determined as a function of the number of arc events for three different switching scenarios, namely T10 (shown by diamonds), T30 (shown by squares) and T60 (shown by circles). The typical arc energy input of a T10 arc is 10.5 kJ +/- 1.0 kJ, whereas it is about 40 kJ +/- 8 kJ for a T30 arc, and 88 kJ +/- 10 kJ for a T60 arc. T10, T30 and T60 mean terminal faults at 10%, 30% and 60%, respectively, of the rated short-circuit current.

When considering the decomposition rate normalized to the arc energy input, a value of about 0.3 mol/MJ +/- 0.05 mol/MJ can be derived with a standard deviation from the average ranging from 10% to 20%. This is illustrated in Fig. 2 showing the decomposition rate of C5K per arc energy input for three different arcing scenarios, namely T10 (shown by diamonds), T30 (shown by squares) and T60 (shown by circles), and for a varying number of shots performed for the arcing scenarios. Thus, by determining the total amount of arc energy to which the insulation gas has been subject to, the total amount of the decomposed organofluorine compound and, thus, also the total concentration of the remaining organofluorine compound C1 can be derived, irrespective of the actual switching event (here e.g. T10, T30 or T60) performed.

As mentioned, the correlation of adiabatic pressure increase and organofluorine compound C1 particle decrease in the insulation gas is universal for different type of experiments and the decrease in organofluorine compound C1 particles correlates well with the fraction of arc energy introduced into the system. This is illustrated by Fig. 3 showing the partial pressure of C5K contained in the insulation gas as a function of the pressure increase for three different arcing experiments, namely T10 (shown by diamonds), T30 (shown by squares) and T60 (shown by circles).

Thus, once the relation between the organofluorine compound C1 particle decrease and the adiabatic pressure

increase is known for a specific switching apparatus, it is sufficient to determine merely the pressure increase to derive the decrease of the organofluorine compound C1.

**Example**

In a volume of 380 liter, a partial pressure of 400 mbar of C5K at a temperature of 295 K corresponds to a molar amount *n*(C1;S1) of about 6.2 mol according to the following formula

$$n(C1;S0) = \frac{p(C1) * V}{R * T0}$$

Starting from an initial filling pressure of 7 bar in the initial state S0, a switching operation ("shot") is performed and the temperature is allowed to reach the initial temperature again (in the second state S1).

In the second state S1, a pressure of 7.21 bar is determined. The difference in the pressure between the initial state S0 and the second state S1 caused by decomposition phenomena is thus 210 mbar, corresponding to an increase in the total amount of the molecules ***δn(shot)*** generated by decomposition of about 3.3 mol according to the following formula:

$$\delta n = \frac{\delta p(S1 - S0) * V}{R * T}$$

According to the following chemical equation:

$$2 \cdot C_5F_{10}O + 4 \cdot O_2 \text{ -> } 5 \cdot CO_2 + 5 \cdot CF_4,$$

the amount of C5K decomposed is, thus, 1.65 mole and the amount of new products generated, namely $CF_4$ and $CO_2$, is 8.25 mole.

If a total decomposition of C5K is assumed (i.e. the organofluorine compound C1 being consumed completely), the total molar amount of molecules generated n(tot.decomp.) would be about 12.4 mol, corresponding to 6.2 mol of C5K decomposed according to the above formula.

The decomposition rate *r*(*C1decomp.*) can then be deduced according to the following formula:

$$r(C1decomp.) = \frac{\delta n(shot) * n(C1;S0)}{n(tot.decomp.)} \quad / \quad Ein$$

Given the above values and assuming a total energy input of about 3 MJ typical of hard test duties, a decomposition rate of about 0.55 mol/MJ is determined.

**Claims**

**1.** Method for diagnosing, monitoring and/or predicting a condition of a switching apparatus, in particular its dielectric insulation capability and/or arc extinction capability, the switching apparatus containing an insulation medium comprising at least one organofluorine compound C1, the method comprising the method elements of:

a) selecting at least one physical quantity x of the insulation medium;
b) determining the difference between a value xso of the physical quantity x at an initial state S0 of the apparatus and a value $x_{S1}$ of the physical quantity x at a second state S1, said second state S1 being later in time than the initial state S0, and
c) deducing from the difference between $x_{S0}$ and $x_{S1}$ the decrease in the amount of the at least one organofluorine compound C1 and/or of the total amount of the at least one organofluorine compound C1 present in the switching apparatus,

**characterized in that**

the physical quantity x is the amount of at least one decomposition product C2 of the at least one organofluorine compound C1 or is a physical quantity dependent on the amount of at least one decomposition product C2 of the at least one organofluorine compound C1, and said method further comprising the method elements of:

counting a number of switching events,
determining therefrom the total arc energy to which the insulation medium has been subjected to, and
correlating the total arc energy to the amount of the organofluorine compound C1 lost by decomposition.

2. Method according to claim 1, wherein the at least one organofluorine compound C1 is selected from the group consisting of: fluoroethers, in particular hydrofluoromonoethers, fluoroketones, in particular perfluoroketones, fluoroolefins, in particular hydrofluoroolefins, fluoronitriles, in particular perfluoronitriles, and mixtures thereof.

3. Method according to claim 1 or 2, wherein the insulation medium further comprises a background gas, in particular selected from the group consisting of: air, specifically synthetic air and/or technical air, an air component, specifically nitrogen and/or oxygen, carbon dioxide, a nitrogen oxide, and mixtures thereof.

4. Method according to any of the preceding claims, wherein between the initial state S0 and the second state S1 at least one switching operation is performed.

5. Method according to any of the preceding claims, wherein in method element a) the pressure p of the insulation medium is selected as the physical quantity x.

6. Method according to any of the preceding claims, wherein in method element b) the difference between pressure pso at the initial state S0 and pressure psi at a second state S1 is determined.

7. Method according to any of the preceding claims, wherein in method element c) the difference between pressure pso at the initial state S0 and pressure psi at a second state S1 is correlated to a specific amount of organofluorine compound C1 being present at the second state S1 and/or is correlated to a specific amount of organofluorine compound C1 decomposed by the transition from the initial state S0 to the second state S1 by means of pre-calibration data.

8. Method according to any of the preceding claims, wherein the second state S1 relates to the state that is obtained starting from the initial state S0 by at least one switching operation, whereby the change from the intial state S0 to the second state S1 is adiabatic.

9. Method according to any of the preceding claims, wherein in method element a) the amount of the at least one decomposition product is selected as physical quantity x, said at least one decomposition product being selected from the group consisting of: tetrafluoromethane, hexafluoropropene, heptafluoropropane, and mixtures thereof.

10. Method according to any of the preceding claims, wherein the amount of the at least one decomposition product is determined by a method selected from the group conisting of: gas chromatography, Fourier transform infrared spectroscopy, optical absorption measurement, and combinations thereof.

11. Method according to any of the preceding claims, wherein the switching apparatus is a gas-insulated switchgear or a component thereof; in particular wherein the switching apparatus is selected from the group consisting of: a circuit breaker, a disconnector, an earthing switch, a transformer, or combinations thereof.

12. Method according to any of the preceding claims, wherein the decomposition rate $r(C1decomp.)$ of organofluorine compound C1 given by the molar amount of organofluorine compound C1 decomposed per amount of energy input is determined according to the following formula:

$$r(C1decomp.) = \frac{\delta n * n(C1;S0)}{n(tot.decomp.)} \quad / \quad E(input)$$

with $n(C1;S0)$ being the amount of the organofluorine compound C1 in mole at the intial state S0 and being defined by the following formula:

$$n(C1; S0) = \frac{p(C1) * V}{R * T0}$$

with *p(C1)* being the partial pressure of the organofluorine compound C1 at the initial state S0, V being the volume of the gas space in which the insulation medium is contained, and T0 being the initial steady state temperature of the electrical apparatus;
*δn* being the difference in the total amount of moles present in the second state S1 compared to the total amount of moles present in the initial state S0, with *δn* being defined by the following formula:

$$\delta n = \frac{\delta p(S1 - S0) * V}{R * T}$$

with δ*p*(*S*1 - S0) being the pressure increase due to irreversible decomposition between the second state S1 and the intial state S0, whereby the second state S1 is obtained from the intial state S0 by performing one single switching operation and after temperature T having reached again the initial steady state temperature T0 of the switching apparatus; with R being the ideal gas constant;
*n*(*tot. decomp.*) relating to the amount of molecules generated by a total decomposition of C1 and being defined according to the following formula:

$$n(tot.decomp.) = ((c + d + \cdots) - (a + b + \cdots))/a * \frac{(p(C1) * V}{R * T0}$$

with *p(C1)* being the partial pressure of the organofluorine compound C1 in the first state S0, c+d+... being the stoichiometric numbers of product entities and a+b+... being the stoichiometric numbers of the reactant entities with "a" being the stoichiometric number of the organofluorine compound C1; and
***E(input)*** being the amount of energy input into the system by the at least one arcing event caused by the switching operation and being defined by the following formula:

$$E(input) = \int_0^{t(arc)} i(arc) * u(arc)\, dt$$

with t = time variable, t(arc) = time duration of the at least one arcing event, i(arc) = arcing current density of the at least one arcing event, and u (arc) = arcing voltage of the at least one arcing event.

**13.** Method according to claim 12, wherein *n*(*tot.decomp.*) is defined according to the following formula:

$$n(tot.decomp.) = ((c + d + \cdots) - (a + b + \cdots))/a * \frac{p(C1) * V}{R * T0}$$

with a, b, c and d being defined by the chemical equation of the decomposition of the organofluorine compound C1 when reacting with oxygen $O_2$ into carbon dioxid $CO_2$ and tetrafluoromethane $CF_4$:

$$a \cdot C1 + b \cdot O_2 \text{ -> } c \cdot CO_2 + d \cdot CF_4 \quad .$$

**14.** Method according to claim 13, wherein the organofluorine compound C1 is a perfluoroketone having exactly 5 carbon atoms ($C_5F_{10}O$), specifically 1,1,1,3,4,4,4-heptafluoro-3-(trifluoromethyl)butan-2-one, and *n(tot.decomp.)* is defined as follows:

$$n(tot.decomp.) = ((5 + 5) - (2 + 4))/2 * \frac{p(C1) * V}{R * T0}$$

according to the following chemical equation:

$$2 \cdot C_5F_{10}O + 4 \cdot O_2 \rightarrow 5 \cdot CO_2 + 5 \cdot CF_4 \;.$$

**15.** Method according to any of claims 12 to 14, wherein the switching apparatus is a circuit breaker, a disconnector and/or a transformer and the end of life of the functionality of the insulation medium is deduced by scaling the decomposition rate *r*(*C*1*decomp.*) with the multiplier

$$Ka = V(arcing\ zone)/V(insulation\ space)$$

with V(arcing zone) being the volume of the arcing zone and V(insulation space) being the volume of the insulation space of the circuit breaker, the disconnector or the transformer, respectively, with the total amount of the organofluorine compound n(C1) in the volume V(insulation space) of the insulation space being above a minimum operational threshold value for providing safe operation of the switching apparatus.

**16.** Method according to claim 1, wherein the total arc energy is determined by multiplying an average arc energy per switching event with the total number of switching events.

**17.** Method according to claim 1, wherein the total arc energy is determined by adding the arc energy values of all switching events, whereby for each switching event the respective arc current interrupted is determined and correlated to the respective arc energy by means of respective pre-calibration data and/or by a respective function.

**18.** Method for reconditioning the dielectric insulation capability and/or arc extinction capability of a switching apparatus, the method being according to any of the preceding claims and comprising the further method element of: replenishing the insulation medium with the insulation medium or a component thereof, once the total amount of the organofluorine compound C1 present in the switching apparatus falls below a predetermined threshold value.

**19.** Device for diagnosing, monitoring and/or predicting a condition of a switching apparatus, in particular its dielectric insulation capability and/or arc extinction capability, **characterized in that** the device is configured to perform the method for diagnosing, monitoring and/or predicting a condition of a switching apparatus according to any of the preceding claims 1 to 17, the device comprising a pressure determining unit and a switching operation counting unit.

**20.** Device according to claim 19, for performing the method for reconditioning according to claim 18, the device comprising a replenishing unit for replenishing the insulation medium with the insulation medium or a component thereof, once the total amount of the organofluorine compound C1 present in the switching apparatus falls below a predetermined threshold value.

**Patentansprüche**

**1.** Verfahren zur Diagnose, Überwachung und/oder Vorhersage eines Zustands einer Schaltvorrichtung, insbesondere ihrer dielektrischen Isolierfähigkeit und/oder Lichtbogenlöschfähigkeit, wobei die Schaltvorrichtung ein Isolationsmedium enthält, das mindestens eine Organofluorverbindung C1 umfasst, wobei das Verfahren die folgenden Verfahrenselemente umfasst:

a) das Auswählen mindestens einer physikalischen Größe x des Isolationsmediums;
b) das Bestimmen der Differenz zwischen einem Wert xso der physikalischen Größe x bei einem Anfangszustand S0 der Vorrichtung und einem Wert $x_{S1}$ der physikalischen Größe x bei einem zweiten Zustand S1, wobei der zweite Zustand S1 später als der Anfangszustand S0 ist, und
c) das Abziehen der Abnahme der Menge der mindestens einen Organofluorverbindung C1 und/oder der Gesamtmenge der mindestens einen Organofluorverbindung C1, die in der Schaltvorrichtung vorhanden ist, von der Differenz zwischen $x_{S0}$ und $x_{S1}$,

**dadurch gekennzeichnet, dass**
die physikalische Größe x die Menge mindestens eines Zersetzungsprodukts C2 der mindestens einen Organofluorverbindung C1 ist oder eine physikalische Größe ist, die von der Menge mindestens eines Zersetzungsprodukts

C2 der mindestens einen Organofluorverbindung C1 abhängt, und das Verfahren weiterhin die folgenden Verfahrenselemente umfasst:

das Zählen einer Zahl von Schaltereignissen,
daraus das Bestimmen der gesamten Lichtbogenenergie, die auf das Isolationsmedium eingewirkt hat, und
das Korrelieren der gesamten Lichtbogenenergie mit der Menge der Organofluorverbindung C1, die durch Zersetzung verloren gegangen ist.

**2.** Verfahren nach Anspruch 1, wobei die mindestens eine Organofluorverbindung C1 ausgewählt ist aus der Gruppe bestehend aus: Fluorethern, insbesondere Hydrofluormonoethern, Fluorketonen, insbesondere Perfluorketonen, Fluorolefinen, insbesondere Hydrofluorolefinen, Fluornitrilen, insbesondere Perfluornitrilen, und Mischungen davon.

**3.** Verfahren nach Anspruch 1 oder 2, wobei das Isolationsmedium weiterhin ein Hintergrundgas umfasst, das insbesondere ausgewählt ist aus der Gruppe bestehend aus: Luft, insbesondere synthetischer Luft und/oder technischer Luft, einer Luftkomponente, insbesondere Stickstoff und/oder Sauerstoff, Kohlendioxid, einem Stickstoffoxid und Mischungen davon.

**4.** Verfahren nach einem der vorhergehenden Ansprüche, wobei zwischen dem Anfangszustand S0 und dem zweiten Zustand S1 mindestens ein Schaltvorgang durchgeführt wird.

**5.** Verfahren nach einem der vorhergehenden Ansprüche, wobei im Verfahrenselement a) der Druck p des Isolationsmediums als physikalische Größe x ausgewählt wird.

**6.** Verfahren nach einem der vorhergehenden Ansprüche, wobei im Verfahrenselement b) die Differenz zwischen dem Druck $p_{S0}$ im Anfangszustand S0 und dem Druck $p_{S1}$ in einem zweiten Zustand S1 bestimmt wird.

**7.** Verfahren nach einem der vorhergehenden Ansprüche, wobei im Verfahrenselement c) mittels Vorkalibrierungsdaten die Differenz zwischen dem Druck $p_{S0}$ im Anfangszustand S0 und dem Druck psi in einem zweiten Zustand S1 mit einer im zweiten Zustand S1 vorhandenen spezifischen Menge der Organofluorverbindung C1 korreliert wird und/oder mit einer spezifischen Menge der Organofluorverbindung C1 korreliert wird, die durch den Übergang vom Anfangszustand S0 zum zweiten Zustand S1 zersetzt worden ist.

**8.** Verfahren nach einem der vorhergehenden Ansprüche, wobei sich der zweite Zustand S1 auf denjenigen Zustand bezieht, der erhalten wird, indem ausgehend vom Anfangszustand S0 mindestens ein Schaltvorgang durchgeführt wird, wobei der Wechsel vom Anfangszustand S0 zum zweiten Zustand S1 adiabatisch ist.

**9.** Verfahren nach einem der vorhergehenden Ansprüche, wobei im Verfahrenselement a) die Menge des mindestens einen Zersetzungsprodukts als physikalische Größe x ausgewählt wird, wobei das mindestens eine Zersetzungsprodukt ausgewählt ist aus der Gruppe bestehend aus: Tetrafluormethan, Hexafluorpropen, Heptafluorpropan und Mischungen davon.

**10.** Verfahren nach einem der vorhergehenden Ansprüche, wobei die Menge des mindestens einen Zersetzungsprodukts durch ein Verfahren bestimmt wird, das ausgewählt ist aus der Gruppe bestehend aus: Gaschromatographie, Fourier-Transformations-Infrarotspektroskopie, Messung der optischen Absorption und Kombinationen davon.

**11.** Verfahren nach einem der vorhergehenden Ansprüche, wobei es sich bei der Schaltvorrichtung um eine gasisolierte Schaltanlage oder eine Komponente davon handelt; wobei die Schaltvorrichtung insbesondere ausgewählt ist aus der Gruppe bestehend aus: einer Trennvorrichtung, einem Trennschalter, einem Erdungsschalter, einem Transformator oder Kombinationen davon.

**12.** Verfahren nach einem der vorhergehenden Ansprüche, wobei die Zersetzungsgeschwindigkeit r(C1*Zers.*) der Organofluorverbindung C1, die durch die pro Menge der Energiezufuhr zersetzte Stoffmenge der Organofluorverbindung C1 gegeben ist, gemäß der folgenden Formel bestimmt wird:

$$\mathrm{r}(\mathrm{C1}\mathit{Zers.}) = \frac{\delta\mathrm{n} * \mathrm{n}(\mathrm{C1};\mathrm{S0})}{\mathrm{n}(\mathrm{ges.\,Zers.})} \;/\; \mathrm{E}(\mathrm{Zufuhr}),$$

wobei *n(C1;S0)* die Menge der Organofluorverbindung C1 in Mol am Anfangszustand S0 ist und die durch die folgende Formel definiert ist:

$$n(C1;S0) = \frac{p(C1) * V}{R * T0}$$

wobei *p(C1)* der Partialdruck der Organofluorverbindung C1 im Anfangszustand S0 ist, V das Volumen des Gasraums ist, in dem das Isolationsmedium enthalten ist, und T0 die Anfangstemperatur der elektrischen Vorrichtung im stationären Zustand ist;
***δn*** die Differenz der Gesamtmenge der im zweiten Zustand S1 vorhandenen Mole im Vergleich zur Gesamtmenge der im Anfangszustand S0 vorhandenen Mole ist, wobei ***δn*** durch die folgende Formel definiert ist:

$$\delta n = \frac{\delta p(S1 - S0) * V}{R * T}$$

wobei ***δp(S1 - S0)*** die Druckzunahme aufgrund einer irreversiblen Zersetzung zwischen dem zweiten Zustand S1 und dem Anfangszustand S0 ist, wobei der zweite Zustand S1 aus dem Anfangszustand S0 erhalten wird, indem ein einzelner Schaltvorgang durchgeführt wird und nachdem die Temperatur T die Anfangstemperatur der Schaltvorrichtung im stationären Zustand T0 wieder erreicht hat; wobei R die Gaskonstante ist;
***n(ges.Zers.)*** sich auf die Menge der Moleküle bezieht, die durch die gesamte Zersetzung von C1 erzeugt werden und die gemäß der folgenden Formel definiert ist:

$$\mathbf{n(ges.Zers.)} = ((c + d + \cdots) - (a + b + \cdots))/a * \frac{(p(C1) * V}{R * T0} ,$$

wobei ***p(C1)*** der Partialdruck der Organofluorverbindung C1 im ersten Zustand S0 ist, c+d+... die stöchiometrischen Zahlen der Produktstoffe sind und a+b+... die stöchiometrischen Zahlen der Reaktandstoffe sind, wobei "a" die stöchiometrische Zahl der Organofluorverbindung C1 ist; und
***E(Zufuhr)*** die Menge der Energie ist, die dem System durch das mindestens eine Lichtbogenereignis zugeführt wurde, das durch den Schaltvorgang bewirkt wurde und durch die folgende Formel definiert ist:

$$\mathbf{E(Zufuhr)} = \int_0^{t(arc)} i(arc) * u(arc)\, dt ,$$

wobei t = Zeitvariable, t(arc) = Zeitdauer des mindestens einen Lichtbogenereignisses, i(arc) = Lichtbogenstromdichte des mindestens einen Lichtbogenereignisses und u(arc) = Lichtbogenspannung des mindestens einen Lichtbogenereignisses.

**13.** Verfahren nach Anspruch 12, wobei *n(ges.Zers.)* gemäß der folgenden Formel definiert ist:

$$\mathbf{n(ges.Zers.)} = ((c + d + \cdots) - (a + b + \cdots))/a * \frac{p(C1) * V}{R * T0} ,$$

wobei a, b, c und d durch die chemische Gleichung der Zersetzung der Organofluorverbindung C1 definiert sind, wenn diese mit Sauerstoff $O_2$ zu Kohlendioxid $CO_2$ und Tetrafluormethan $CF_4$ reagiert:

$$a \cdot C1 + b \cdot O_2 \rightarrow c \cdot CO_2 + d \cdot CF_4.$$

**14.** Verfahren nach Anspruch 13, wobei die Organofluorverbindung C1 ein Perfluorketon mit exakt 5 Kohlenstoffatomen ($C_5F_{10}O$), insbesondere 1, 1, 1, 3, 4, 4, 4-Heptafluor-3-(trifluormethyl)butan-2-on, ist, und ***n(ges.Zers.)*** wie folgt:

$$n(ges.Zers.) = ((5+5)-(2+4))/2 * \frac{p(C1) * V}{R * T0}$$

gemäß der folgenden chemischen Gleichung:

$$2 \bullet C_5F_{10}O + 4 \bullet O_2 \rightarrow 5 \bullet CO_2 + 5 \bullet CF_4$$

definiert ist.

**15.** Verfahren nach einem der Ansprüche 12 bis 14, wobei die Schaltvorrichtung eine Trennvorrichtung, ein Trennschalter und/oder ein Transformator ist und das Ende der Lebensdauer der Funktionalität des Isolationsmediums abgeleitet wird, indem die Zersetzungsgeschwindigkeit ***r(C1Zers.)*** mit dem Multiplikator

$$Ka = V(Lichtbogenzone) / V(Isolationsraum)$$

skaliert wird, wobei V(Lichtbogenzone) das Volumen der Lichtbogenzone ist und V(Isolationsraum) das Volumen des Isolationsraums der Trennvorrichtung, des Trennschalters bzw. des Transformators ist, wobei die Gesamtmenge der Organofluorverbindung n(C1) im Volumen V(Isolationsraum) des Isolationsraums oberhalb eines minimalen Betriebsschwellenwertes zur Gewährleistung eines sicheren Betriebs der Schaltvorrichtung liegt.

**16.** Verfahren nach Anspruch 1, wobei die gesamte Lichtbogenenergie bestimmt wird, indem eine mittlere Lichtbogenenergie pro Schaltereignis mit der Gesamtzahl von Schaltereignissen multipliziert wird.

**17.** Verfahren nach Anspruch 1, wobei die gesamte Lichtbogenenergie bestimmt wird, indem die Lichtbogenenergiewerte aller Schaltereignisse addiert werden, wobei für jedes Schaltereignis der jeweilige unterbrochene Lichtbogenstrom bestimmt und mit der jeweiligen Lichtbogenenergie mittels jeweiliger Vorkalibrierungsdaten und/oder mittels einer jeweiligen Funktion korreliert wird.

**18.** Verfahren zur Wiederherstellung der dielektrischen Isolierfähigkeit und/oder Lichtbogenlöschfähigkeit einer Schaltvorrichtung, wobei es sich beim Verfahren um eines nach einem der vorhergehenden Ansprüche handelt und welches das folgende weitere Verfahrenselement umfasst:
das Wiederauffüllen des Isolationsmediums mit dem Isolationsmedium oder einer Komponente davon, sobald die Gesamtmenge der im der Schaltvorrichtung vorhandenen Organofluorverbindung C1 unter einen vorbestimmten Schwellenwert fällt.

**19.** Vorrichtung zur Diagnose, Überwachung und/oder Vorhersage eines Zustands einer Schaltvorrichtung, insbesondere ihrer dielektrischen Isolierfähigkeit und/oder Lichtbogenlöschfähigkeit, **dadurch gekennzeichnet, dass** die Vorrichtung so ausgebildet ist, dass sie das Verfahren zur Diagnose, Überwachung und/oder Vorhersage eines Zustands einer Schaltvorrichtung nach einem der vorhergehenden Ansprüche 1 bis 17 durchführt, wobei die Vorrichtung eine Druckbestimmungseinheit und eine Schaltvorgangzähleinheit umfasst.

**20.** Vorrichtung nach Anspruch 19 zur Durchführung des Verfahrens zur Wiederherstellung nach Anspruch 18, wobei die Vorrichtung eine Wiederbefülleinheit zum Wiederauffüllen des Isolationsmediums mit dem Isolationsmedium oder einer Komponente davon, sobald die Gesamtmenge der in der Schaltvorrichtung vorhandenen Organofluorverbindung C1 unter einen vorbestimmten Schwellenwert fällt, umfasst.

## Revendications

**1.** Procédé pour diagnostiquer, surveiller et/ou prédire un état d'un appareil de commutation, en particulier sa capacité d'isolation diélectrique et/ou sa capacité d'extinction d'arc, l'appareil de commutation contenant un milieu isolant comprenant au moins un composé organofluoré C1, le procédé comprenant les éléments de procédé suivants :

a) sélection d'au moins une quantité physique x du milieu isolant ;
b) détermination de la différence entre une valeur xso de la grandeur physique x à un état initial S0 de l'appareil

et une valeur $x_{S1}$ de la grandeur physique x à un second état S1, ledit second état S1 étant ultérieur dans le temps à l'état initial S0, et

c) déduction de la différence entre $x_{S0}$ et $x_{S1}$ la diminution de la quantité de l'au moins un composé organofluoré C1 et/ou de la quantité totale de l'au moins un composé organofluoré C1 présent dans l'appareil de commutation,

**caractérisé en ce que**
la quantité physique x est la quantité d'au moins un produit de décomposition C2 de l'au moins un composé organofluoré C1 ou est une quantité physique dépendant de la quantité d'au moins un produit de décomposition C2 de l'au moins un composé organofluoré C1, et ledit procédé comprend en outre les éléments de procédé suivants :

comptage d'un nombre d'événements de commutation,
détermination à partir de cela de l'énergie d'arc totale à laquelle le milieu d'isolation a été soumis, et
corrélation de l'énergie d'arc totale à la quantité du composé organofluoré C1 perdu par décomposition.

2. Procédé selon la revendication 1, l'au moins un composé organofluoré C1 étant choisi dans le groupe constitué par : les fluoroéthers, en particulier les hydrofluoro-monoéthers, les fluorocétones, en particulier les perfluorocétones, les fluorooléfines, en particulier les hydrofluorooléfines, les fluoronitriles, en particulier les perfluoronitriles, et leurs mélanges.

3. Procédé selon la revendication 1 ou 2, le milieu isolant comprenant en outre un gaz résiduel, en particulier choisi dans le groupe constitué par : l'air, spécifiquement l'air synthétique et/ou l'air technique, un composant de l'air, spécifiquement l'azote et/ou l'oxygène, le dioxyde de carbone, un oxyde d'azote, et leurs mélanges.

4. Procédé selon l'une quelconque des revendications précédentes, entre l'état initial S0 et le second état S1, au moins une opération de commutation étant réalisée.

5. Procédé selon l'une quelconque des revendications précédentes, dans l'élément de procédé a), la pression p du milieu isolant étant choisie comme grandeur physique x.

6. Procédé selon l'une quelconque des revendications précédentes, dans l'élément de procédé b), la différence entre la pression $p_{S0}$ à l'état initial SO et la pression $p_{S1}$ à un second état S1 étant déterminée.

7. Procédé selon l'une quelconque des revendications précédentes, dans l'élément de procédé c), la différence entre la pression $p_{S0}$ à l'état initial S0 et la pression $p_{S1}$ à un second état S1 étant corrélée à une quantité spécifique de composé organofluoré C1 présent au second état S1 et/ou étant corrélée à une quantité spécifique de composé organofluoré C1 décomposé par le passage de l'état initial S0 au second état S1 au moyen de données de précalibrage.

8. Procédé selon l'une quelconque des revendications précédentes, le second état S1 concernant l'état qui est obtenu à partir de l'état initial S0 par au moins une opération de commutation, le passage de l'état initial S0 au second état S1 étant adiabatique.

9. Procédé selon l'une quelconque des revendications précédentes, dans l'élément de procédé a), la quantité de l'au moins un produit de décomposition étant choisie comme quantité physique x, ledit au moins un produit de décomposition étant choisi dans le groupe constitué par : le tétrafluorométhane, l'hexafluoropropène, l'heptafluoropropane, et leurs mélanges.

10. Procédé selon l'une quelconque des revendications précédentes, la quantité de l'au moins un produit de décomposition étant déterminée par un procédé choisi dans le groupe constitué par : la chromatographie en phase gazeuse, la spectroscopie infrarouge à transformée de Fourier, la mesure d'absorption optique, et leurs combinaisons.

11. Procédé selon l'une quelconque des revendications précédentes, l'appareil de commutation étant un appareillage de commutation à isolation gazeuse ou un composant de celui-ci ; en particulier, l'appareil de commutation étant choisi dans le groupe constitué par : un disjoncteur, un sectionneur, un sectionneur de terre, un transformateur, ou des combinaisons de ceux-ci.

12. Procédé selon l'une quelconque des revendications précédentes, le taux de décomposition *r(C1décomp.)* du composé organofluoré C1, donné par la quantité molaire de composé organofluoré C1 décomposé par quantité d'énergie

entrée, étant déterminé selon la formule suivante :

$$r(C1decomp.) = \frac{\delta n * n(C1;S0)}{n(tot.decomp.)} \quad / \quad E(input)$$

avec n(C1 ;SO) étant la quantité du composé organofluoré C1 en mole à l'état initial S0 et étant défini par la formule suivante :

$$n(C1;S0) = \frac{p(C1) * V}{R * T0}$$

avec *p*(*C1*) étant la pression partielle du composé organo-fluoré C1 à l'état initial S0, V étant le volume de l'espace gazeux dans lequel le milieu isolant est contenu, et T0 étant la température initiale de l'appareil électrique en régime permanent ;
$\delta n$ étant la différence dans la quantité totale de moles présentes dans le second état S1 par rapport à la quantité totale de moles présentes dans l'état initial S0, avec $\delta n$ étant défini par la formule suivante :

$$\delta n = \frac{\delta p(S1 - S0) * V}{R * T}$$

avec $\delta p$(S1-S0) étant l'augmentation de pression due à la décomposition irréversible entre le second état S1 et l'état initial S0, le second état S1 étant obtenu à partir de l'état initial S0 en effectuant une seule opération de commutation et après que la température T a atteint à nouveau la température initiale de régime permanent T0 de l'appareil de commutation ; avec R étant la constante des gaz parfaits ;
*n(tot.decomp.)* se rapportant à la quantité de molécules générées par une décomposition totale de C1 et étant défini selon la formule suivante :

$$n(tot.decomp.) = ((c + d + \cdots) - (a + b + \cdots))/a * \frac{(p(C1) * V}{R * T0}$$

avec *p*(*C1*) étant la pression partielle du composé organofluoré C1 dans le premier état S0, c+d+... étant les nombres stœchiométriques des entités produits et a+b+... étant les nombres stœchiométriques des entités réactives avec "a" étant le nombre stœchiométrique du composé organofluoré C1 ; et
*E(input)* étant la quantité d'énergie introduite dans le système par l'au moins un événement d'arc provoqué par l'opération de commutation et étant définie par la formule suivante :

$$E(input) = \int_0^{t(arc)} i(arc) * u(arc)\, dt$$

avec t = variable de temps, t(arc) = durée de temps de l'au moins un événement d'arc, i(arc) = densité de courant d'arc de l'au moins un événement d'arc, et u(arc) = tension d'arc de l'au moins un événement d'arc.

**13.** Procédé selon la revendication 12, *n(tot.decomp.)* étant défini selon la formule suivante :

$$n(tot.decomp.) = ((c + d + \cdots) - (a + b + \cdots))/a * \frac{(p(C1) * V}{R * T0}$$

avec a, b, c et d étant définis par l'équation chimique de la décomposition du composé organofluoré C1 lors de sa réaction avec l'oxygène $O_2$ en dioxyde de carbone $CO_2$ et en tétrafluorométhane $CF_4$ :

$$a \cdot C1 + b \cdot O_2 \rightarrow c \cdot CO_2 + d \cdot CF_4.$$

**14.** Procédé selon la revendication 13, le composé organofluoré C1 étant une perfluorocétone ayant exactement 5 atomes de carbone ($C_5F_{10}O$), spécifiquement la 1,1,1,3,4,4,4-heptafluoro-3-(trifluorométhyl)butan-2-one, et *n(tot.decomp)* étant défini comme suit :

$$n(tot.decomp.) = ((5+5) - (2+4))/2 * \frac{p(C1) * V}{R * T0}$$

selon l'équation chimique suivante :

$$2 \cdot C_5F_{10}O + 4 \cdot O_2 \rightarrow 5 \cdot CO_2 + 5 \cdot CF_4.$$

**15.** Procédé selon l'une quelconque des revendications 12 à 14, l'appareil de commutation étant un disjoncteur, un sectionneur et/ou un transformateur et la fin de vie de la fonctionnalité du milieu isolant étant déduite, en mettant à l'échelle le taux de décomposition *r(C*1*décomp.)* avec le multiplicateur

$$Ka = V(zone\ d'arc)/V(espace\ d'isolation)$$

V(zone d'arc) étant le volume de la zone d'arc et V(espace d'isolation) étant le volume de l'espace d'isolation du disjoncteur, du sectionneur ou du transformateur, respectivement, la quantité totale du composé organofluoré n(C1)dans le volume V(espace d'isolation) de l'espace d'isolation étant supérieure à une valeur seuil opérationnelle minimale pour assurer un fonctionnement sûr de l'appareil de commutation.

**16.** Procédé selon la revendication 1, l'énergie d'arc totale étant déterminée en multipliant une énergie d'arc moyenne par événement de commutation avec le nombre total d'événements de commutation.

**17.** Procédé selon la revendication 1, l'énergie d'arc totale étant déterminée en ajoutant les valeurs d'énergie d'arc de tous les événements de commutation, pour chaque événement de commutation, le courant d'arc respectif interrompu étant ainsi déterminé et corrélé, à l'énergie d'arc respective au moyen de données de précalibrage respectives et/ou par une fonction respective.

**18.** Procédé de reconditionnement de la capacité d'isolation diélectrique et/ou de la capacité d'extinction d'arc d'un appareil de commutation, le procédé étant conforme à l'une quelconque des revendications précédentes et comprenant l'élément de procédé supplémentaire suivant :
réapprovisionnement du milieu isolant avec le milieu isolant ou un composant de celui-ci, une fois que la quantité totale du composé organofluoré C1 présent dans l'appareil de commutation tombe en dessous d'une valeur seuil prédéterminée.

**19.** Dispositif pour diagnostiquer, surveiller et/ou prédire un état d'un appareil de commutation, en particulier sa capacité d'isolation diélectrique et/ou sa capacité d'extinction d'arc, **caractérisé en ce que** le dispositif est configuré pour réaliser le procédé pour diagnostiquer, surveiller et/ou prédire un état d'un appareil de commutation selon l'une quelconque des revendications précédentes 1 à 17, le dispositif comprenant une unité de détermination de la pression et une unité de comptage des opérations de commutation.

**20.** Dispositif selon la revendication 19, pour la mise en œuvre du procédé de reconditionnement selon la revendication 18, le dispositif comprenant une unité de réapprovisionnement pour réapprovisionner le support d'isolation avec le support d'isolation ou un composant de celui-ci, une fois que la quantité totale du composé organofluoré C1 présent dans l'appareil de commutation tombe en dessous d'une valeur seuil prédéterminée.

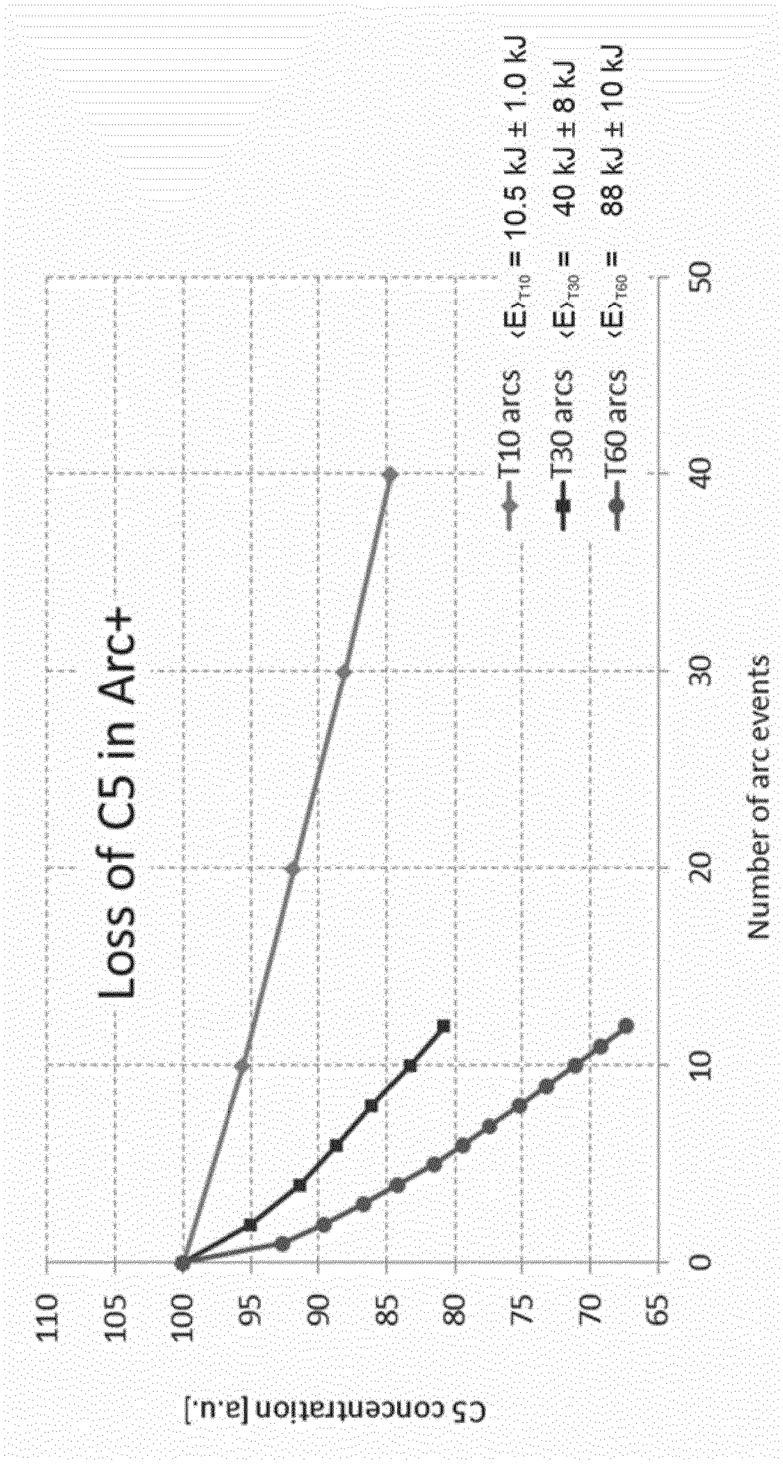
Loss of C5 in Arc+
C5 concentration [a.u.]
110
105
100
95
90
85
80
75
70
65
Number of arc events
0
10
20
30
40
50
T10 arcs ⟨E⟩T10 = 10.5 kJ ± 1.0 kJ
T30 arcs ⟨E⟩T30 = 40 kJ ± 8 kJ
T60 arcs ⟨E⟩T60 = 88 kJ ± 10 kJ

Fig. 1

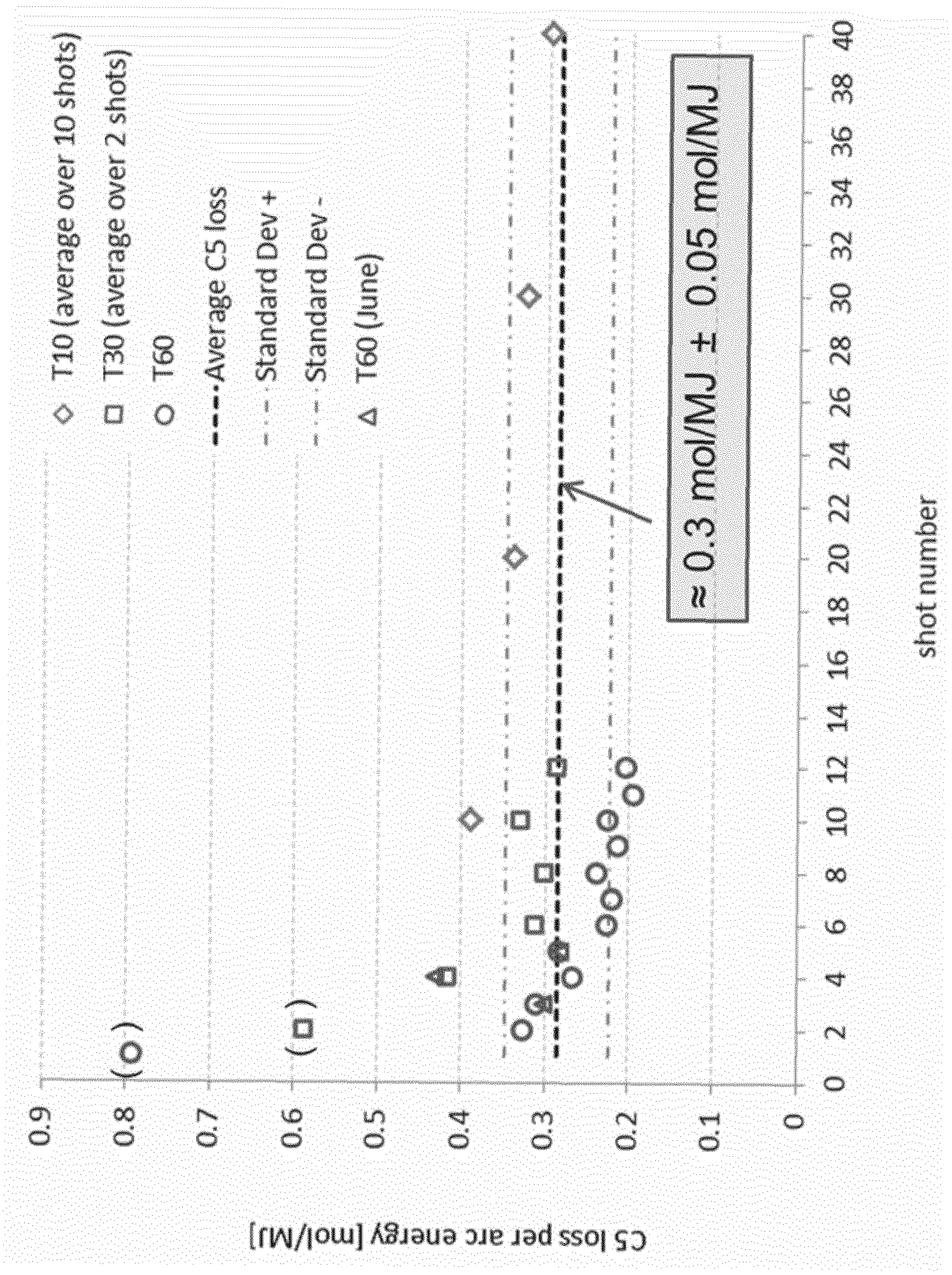
T10 (average over 10 shots)
T30 (average over 2 shots)
T60
Average C5 loss
Standard Dev +
Standard Dev -
T60 (June)
≈ 0.3 mol/MJ ± 0.05 mol/MJ
C5 loss per arc energy [mol/MJ]
shot number
0
0.1
0.2
0.3
0.4
0.5
0.6
0.7
0.8
0.9
0 2 4 6 8 10 12 14 16 18 20 22 24 26 28 30 32 34 36 38 40

Fig. 2

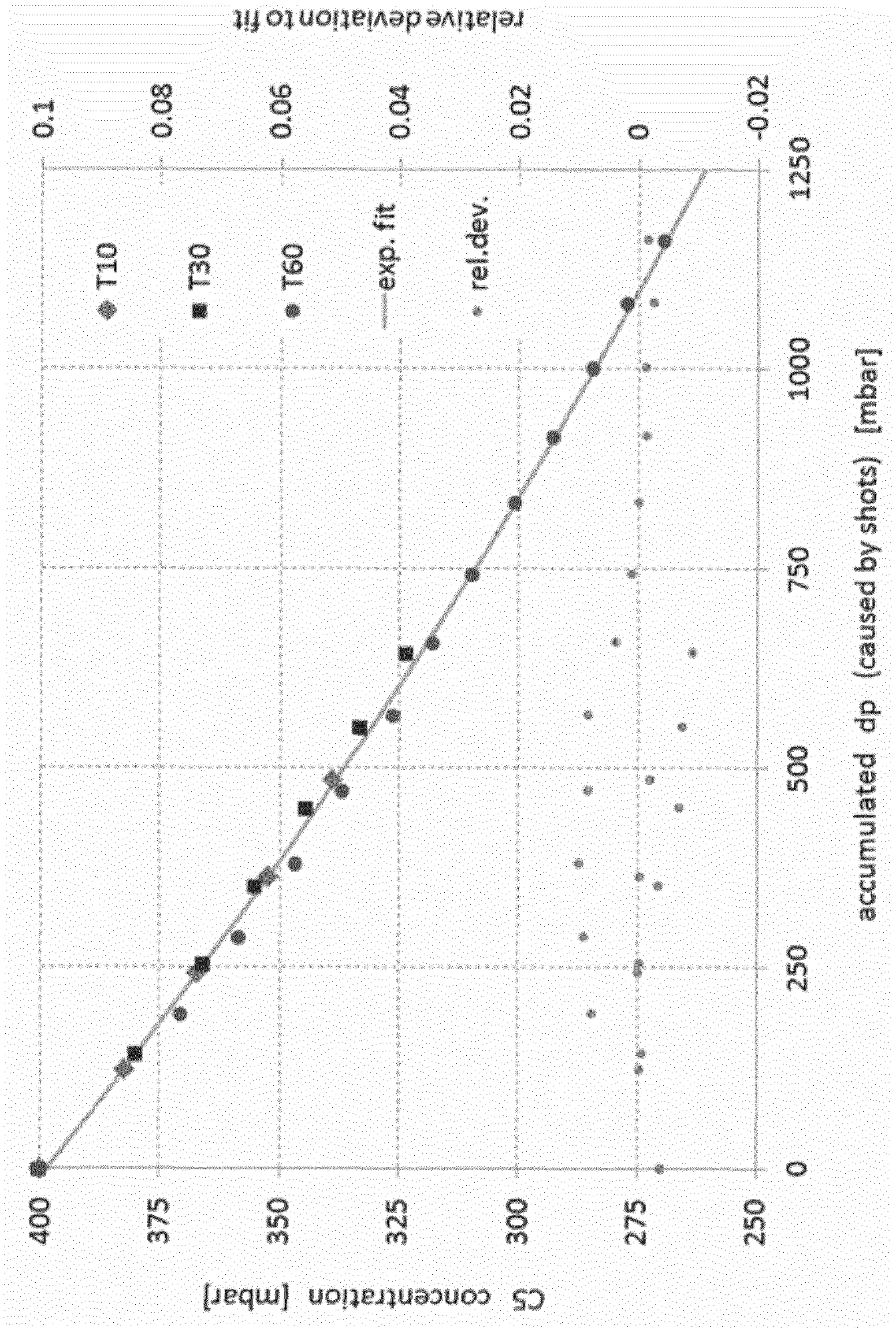

C5 concentration [mbar]
400
375
350
325
300
275
250
accumulated dp (caused by shots) [mbar]
0
250
500
750
1000
1250
relative deviation to fit
0.1
0.08
0.06
0.04
0.02
0
-0.02
T10
T30
T60
exp. fit
rel.dev.


Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010142346 A
- WO 2012080246 A
- WO 2012080222 A
- WO 2014037030 A
- WO 2014037395 A1
- WO 2014053661 A